## Europäisches Patentamt
## European Patent Office
## Office européen des brevets

(19)

(11) Veröffentlichungsnummer: **0 050 213**
**B1**

(12)

# EUROPÄISCHE PATENTSCHRIFT

(45) Veröffentlichungstag der Patentschrift:
**08.08.84**

(51) Int. Cl.³: **F 16 C 27/06**

(21) Anmeldenummer: **81107359.2**

(22) Anmeldetag: **17.09.81**

(54) **Selbstausrichtende Lagerung.**

(30) Priorität: **18.10.80 DE 3039422**
**23.05.81 DE 3120608**

(43) Veröffentlichungstag der Anmeldung:
**28.04.82 Patentblatt 82/17**

(45) Bekanntmachung des Hinweises auf die Patenterteilung:
**08.08.84 Patentblatt 84/32**

(84) Benannte Vertragsstaaten:
**FR GB IT**

(56) Entgegenhaltungen:
**AT - B - 217 794**
**DE - A - 1 613 227**
**DE - A - 1 625 537**
**DE - B - 1 066 059**
**FR - A - 1 086 999**
**FR - A - 1 296 932**
**GB - A - 960 611**
**US - A - 2 062 290**
**US - A - 2 173 250**
**US - A - 2 439 267**
**US - A - 2 653 063**
**US - A - 3 885 840**

(73) Patentinhaber: **SKF KUGELLAGERFABRIKEN GMBH,**
**Ernst-Sachs-Strasse 2-8 Postfach 1440,**
**D-8720 Schweinfurt (DE)**

(72) Erfinder: **Brandenstein, Manfred, Tränkgasse 57,**
**D-8781 Eussenheim (DE)**
Erfinder: **Walter, Lothar, Harald-Hamberg-Strasse 18,**
**D-8720 Schweinfurt (DE)**
Erfinder: **Ernst, Horst M., Frankenstrasse 33,**
**D-8735 Eltingshausen (DE)**
Erfinder: **Kaschube, Karl-Friedrich, Bohrerstrasse 8,**
**D-8721 Niederwerrn (DE)**

(74) Vertreter: **Glanz, Werner, Dipl.-Ing.,**
**Ernst-Sachs-Strasse 2-8, D-8720 Schweinfurt (DE)**

BUNDESDRUCKEREI BERLIN

**Beschreibung**

Die Erfindung betrifft eine selbstausrichtende Lagerung, insbesondere für Wellen von Elektromotoren, bestehend aus zwei mit Abstand voneinander und mit festem Sitz auf einer Welle angeordneten Lagern, insbesondere Wälzlagern, wobei der Außenring mindestens eines Lagers mit einem Kunststoffmantel versehen ist und von einem Lagersitz in einem Gehäuse oder dgl. aufgenommen wird.

Eine Lagerung dieser Art ist beispielsweise schon durch die DE-A-1 613 227 bekannt. Diese Ausführung weist Kugellager auf, über die getrennt ausgebildete Kunststoffkalotten gesteckt werden die von konischen Ausnehmungen in den Lagerträgern aufgenommen werden. Zwar ist mit dieser bekannten Ausführung eine Ausrichtung der Lager an den konischen Flächen möglich, jedoch ergeben sich erhebliche Mängel im Betrieb, weil kein ausreichend fester Sitz der Lager in den Lagerträgern gegeben ist. Lediglich eine einzige axial wirkende Federscheibe drückt die Lager gegen die konischen Sitzflächen, wobei die Läuferwelle in axialer Richtung nachgeben kann, wodurch sich ein Lager von seiner Sitzfläche abhebt und es zu Störungen und Ausfall des Motors kommen kann. Der Mangel kann nur teilweise durch eine sehr stark federnde Scheibe beseitigt werden, wodurch sich aber sehr hohe Reibungsverluste durch die extreme axiale Vorspannung der Lager ergeben. Darüber hinaus ist die bekannte Ausführung sehr aufwendig.

Aufgabe der Erfindung ist es, bei ausreichend festem Sitz der Lager im Gehäuse, sowohl in radialer als auch in axialer Richtung ein selbsttätiges Ausrichten zu gewährleisten und darüber hinaus eine preiswerte Lösung zu schaffen.

Die Aufgabe wird dadurch gelöst, daß der Kunststoffmantel aus einem mit dem Außenring fest verbundenen, weichelastischen Material besteht und einen radial vorstehenden, beim Einpressen in den Lagersitz sich bis zur Kompressionsgrenze verdichtenden Ringwulst mit gegenüber dem restlichen Mantelteil größeren Außendurchmesser aufweist, und der Lagersitz im Gehäuse zylindrisch ist.

Die Ringwulst ist dabei so bemessen, daß beim Einpressen des Außenringes in die zylindrische Bohrung des Gehäuses oder dgl. diese bis nahe an die Kompressionsgrenze radial verdichtet wird, der restliche Kunststoffmantel jedoch nur an der Sitzfläche anliegt oder nur geringfügig verformt wird. Durch den im wesentlichen abgerundeten Querschnitt der Ringwulst, die weiterhin auch nur ringförmig an einem Teil der Sitzfläche mit hohem Druck anliegt, ist ein Ausrichten des betreffenden Lagers, d. h. Winkelbewegungen um seine Achslinie möglich. Die Ringwulst macht dabei, ohne ihre Haftung an der Sitzfläche zu verlieren, innerhalb des verdichteten Materials eine Walkbewegung, wobei nur Materialteile verlagert werden, die radiale Position des Lagers jedoch vorteilhafterweise erhalten bleibt, da eine weitere elastische Bewegung über die Kompressionsgrenze hinweg nicht oder nur durch extrem hohe Kräfte möglich ist. Die seitlich angrenzenden, elastischen Mantelteile haben auf die Ringwulst eine stabilisierende Wirkung, indem sie verhindern, daß das hohe Ausdehnungsbestreben der Ringwulst eine Schiefstellung des Lagers bewirkt. Durch maßliche Abstimmung der Ringwulst gegenüber dem seitlich anschließenden zylindrischen Mantelteil kann erreicht werden, daß das Lager leichtgängige Ausrichtbewegungen, ähnlich denen eines Kugelgelenkes machen kann, obwohl es radial einen festen Sitz hat. Ein ausreichend fester Sitz in axialer Richtung ist bei der erfindungsgemäßen Lagerung dadurch gegeben, daß bei dieser Bewegung die Ringwulst nicht, wie oben beschrieben, Winkelbewegungen um die Achse des Lagers macht, sondern nur in die eine oder andere axiale Richtung gedrückt wird, wobei sie selbst und die seitlich angrenzenden Mantelteile Widerstand leisten. Vorteilhafter Weise ändert sich dabei die radiale Position des Lagers nicht.

Nach einem weiteren Merkmal der Erfindung ist der Kunststoffmantel im Anschluß an die Ringwulst mindestens zu einer Seitenfläche des Außenringes hin kegelförmig verjüngt. Die Kegelform des Kunststoffmantels erleichtert das Einpressen in die zylindrische Bohrung des Gehäuses oder dergl., wobei in den meisten Fällen allein durch axiales Pressen unter Verwendung von etwas Gleitmittel der Einbau möglich ist.

Nach einem weiteren Merkmal der Erfindung ist der Kunststoffmantel, mindestens eine Seitenfläche des Außenringes ganz oder teilweise umfassend und sich im wesentlichen radial nach innen als ringförmige Lippe fortsetzend und mit einer Fläche des Innenringes eine Dichtung bildend am Außenring des Lagers angeordnet. Dadurch ist auf einfache Weise die betreffende Seite des Lagers abgedichtet, wobei sowohl schleifende als auch nicht schleifende Dichtungsausführungen möglich sind. Durch besondere Verfahren der Kunststofftechnik kann die ringförmige Dichtlippe gegenüber dem eigentlichen Kunststoffmantel auch weicher oder härter ausgeführt werden. Bei diesem Ausführungsbeispiel besteht der Kunststoffmantel und die Dichtlippe aus einem einzigen Stück, so daß im wesentlichen ohne Mehraufwand ein abgedichtetes Lager hergestellt werden kann.

Bei einer weiteren bevorzugten Ausführungsform der Erfindung weist der Kunststoffmantel axial vorspringende, am Umfang verteilte Noppen auf. Durch die Noppen stützt sich der Außenring gegen eine radiale Fläche, z. B. gegen die Schulter des Lagersitzes im Gehäuse oder dgl. elastisch ab. Das Lager kann sich dadurch in einem noch größeren Bereich ausrichten, wobei durch die Anzahl und Größe der Noppen eine Anpassung an den jeweiligen Anwendungsfall möglich ist.

Bei einem anderen Ausführungsbeispiel der Erfindung weist der Kunststoffmantel an mindestens einer Seitenfläche des Außenringes im wesentlichen axial überstehend eine radial nach innen offene Ringnut zur Aufnahme einer Dichtscheibe oder dgl. auf. Je nach Härte des überstehenden Materials des Kunststoffmantels kann eine Dichtscheibe beispielsweise aus Metall nach dem Zusammenbau des Lagers eingeschnappt werden. Der innere Rand der Dichtscheibe ist dabei so ausgeführt, daß er mit dem Innenring des Lagers eine Spaltdichtung bildet. Es ist jedoch auch möglich, handelsübliche Dichtringe mit einer am Innenring anlaufenden Dichtlippe zu verwenden.

Nach einem weiteren Merkmal der Erfindung besteht zwischen dem Außenring und dem Kunststoffmantel durch Umspritzen, Vulkanisieren, Kleben oder dgl. eine feste Verbindung. Durch die verschiedenen Fertigungsverfahren entsteht zwischen dem metallischen Außenring und dem Kunststoffmantel eine feste Verbindung, so daß beispielsweise, wie weiter oben beschrieben wurde, durch wenige Arbeitsgänge ein beiderseits abgedichtetes, sich selbst ausrichtendes Lager entsteht.

Nach weiteren Merkmalen der Erfindung ist der Kunststoffmantel mehrteilig ausgebildet und die Ringwulst ist durch einen in den Kunststoffmantel eingesetzten Rundschnurring gebildet. Bei dieser Ausführung können auf einfache Weise unterschiedliche und scharf abgegrenzte Härtezonen geschaffen werden, wodurch sich das betreffende Lager bei festem radialen Sitz besonders leicht ausrichten kann.

Bei einem besonders vorteilhaften Ausführungsbeispiel einer erfindungsgemäßen Lagerung, insbesondere für Elektromotoren, sind die Lager als Schrägkugellager mit mindestens einem aus Blech geformten Laufring ausgeführt. Während beispielsweise der Innenring in üblicher Weise massiv ausgeführt ist und damit den Qualitätsanforderungen entsprechende hochwertige Laufeigenschaften aufweist, kann der Außenring spanlos aus Blech gefertigt werden, weil er sich über den Kunststoffmantel in der Aufnahmebohrung des Gehäuses oder dgl. selbst nach der Achse der Läuferwelle ausrichtet. Dadurch ist es nicht notwendig, die üblicherweise als Sitzflächen, nämlich den Mantel und die Seitenflächen zu bearbeiten. Obwohl das Schrägkugellager insgesamt äußerst preiswert herzustellen ist, weist es doch im eingebauten Zustand die Präzision der hochwertigen massiven Ausführung auf.

Bei einer weiteren Ausführungsform der Erfindung ist von mindestens einer Seitenfläche des Außenringes her ein in den Bereich der Laufbahn hineinragender, an den Kunststoffmantel angeformter, elastischer Haltering für Wälzkörper vorgesehen.

Je nach Ausführung des Lagers können an einer oder an beiden Seiten Halteringe vorgesehen werden. Bei einem Schrägkugellager beispielsweise setzt sich der Kunststoffmantel an der einen Seitenfläche des Außenringes axial bis in den Bereich der Laufbahn vorspringend fort, so daß die Wälzkörper daran gehindert werden, radial nach innen aus der Laufbahn zu fallen. An der anderen Seitenfläche des Außenringes ist in ähnlicher Weise ein radial nach innen sich fortsetzender Haltering vorgesehen, der ebenfalls an den Kunststoffmantel angeformt ist und die Wälzkörper daran hindert, in axialer Richtung aus der Laufbahn zu fallen. Diese Funktion kann jedoch auch zum Beispiel von einer Dichtscheibe oder Dichtlippe übernommen werden, wie sie schon weiter oben beschrieben ist. Die Halteborde sind elastisch nachgebend ausgeführt und so dimensioniert bzw. angeordnet, daß sich die Wälzkörper beim Zusammenbau leicht in den Außenring einschnappen lassen.

nach einem weiteren Merkmal der Erfindung ist der Haltebord bei zusammengebautem Wälzlager im Abstand von den Wälzkörpern angeordnet.

Die Wälzkörper werden zwar bei fehlendem Innenring vorteilhafterweise durch den Haltering getragen, werden jedoch durch das Einlegen des Innenringes oder dgl. in ihre eigentliche Laufposition verschoben, wodurch sie nicht mehr am Haltering anliegen und dadurch vorteilhafterweise ohne zusätzliche Reibung abrollen können.

Bei einem anderen Ausführungsbeispiel weist der Haltering am Umfang verteilte, axial verlaufende Schlitze auf.

Durch die Schlitze wird der Haltering in einzelne Abschnitte aufgeteilt, wodurch eine bessere elastische Nachgiebigkeit beim Einschnappen der Wälzkörper gewährleistet ist. Die Anzahl der Schlitze kann dem jeweiligen Lager angepaßt werden.

Durch die erfindungsgemäße Lagerung, insbesondere durch die spezielle Gestaltung des Kunststoffmantels, wurde eine Ausführung geschaffen, die sich durch besonders geringen Aufwand bei der Herstellung und beim Einbau auszeichnet.

Die Erfindung wird im folgenden anhand der in der Zeichnung dargestellten Beispiele beschrieben. Es zeigt

Fig. 1a die Teilansicht des Außenringes eines Rollenlagers mit Kunststoffmantel vor dem Einbau im Querschnitt,

Fig. 1b den Außenring von Fig. 1a nach dem Einbau,

Fig. 2 Teilansicht eines beiderseits abgedichteten Schrägkugellagers mit Kunststoffmantel im Querschnitt,

Fig. 3 die Lagerung einer Welle mit zwei Schrägkugellagern im Querschnitt,

Fig. 4 den Außenring eines Schrägkugellagers mit zwei Halteringen im Schnitt und

Fig. 5 den Außenring eines Schrägkugellagers mit einem Haltering und einer Dichtscheibe im Schnitt.

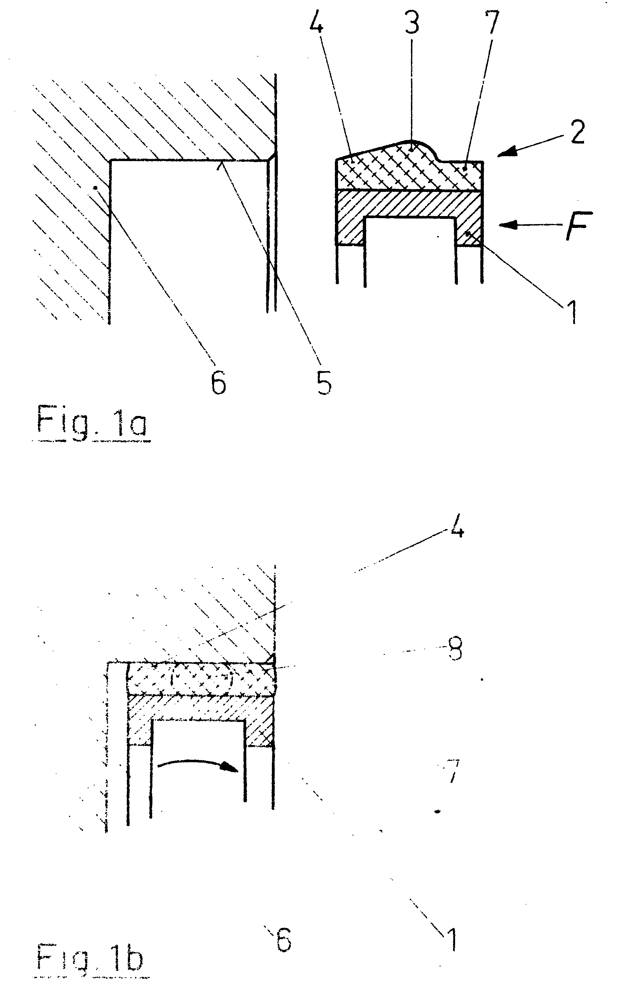

Der in Fig. 1a dargestellte Außenring 1 eines Rollenlagers ist mit einem elastischen Kunststoffmantel 2 umgeben. In der Mitte ist der Kunststoffmantel 2 mit einer Ringwulst 3 mit größerem Außendurchmesser versehen. Zu einer Seitenfläche des Rollenlagers hin verjüngt sich der Kunststoffmantel 2 kegelförmig. Das Einpressen des Außenringes 1 in die zylindrische Bohrung 5 eines Gehäuses 6 oder dgl. erfolgt zunächst durch Einsetzen des kegelförmigen Anfangsbereiches 4, dessen Außendurchmesser geringfügig kleiner ist als der Durchmesser der Bohrung 5 im Gehäuse 6. Durch axialen Druck gegen den Außenring 1 und mit etwas Gleitmittel auf dem Kunststoffmantel 2 wird das elastische Material durch die Bohrungsfläche teils verdrängt und teils radial zusammengepreßt. Im Bereich der Ringwulst 3 muß ein großes Materialvolumen zusammengepreßt werden, während der nachfolgende zylindrische Mantelteil 7 im wesentlichen den gleichen Durchmesser aufweist wie die Bohrung 5 im Gehäuse 6. Wie in Fig. 1b angedeutet ist, ergibt sich dadurch zwischen dem Außenring 1 und dem Gehäuse 6 eine ringförmige Zwischenlage, die etwa in der Mitte einer Zone 8 sehr starker, bis in die Nähe der Kompressionsgrenze reichender Verdichtung aufweist, während die beiderseits angrenzenden Bereiche 4, 7 wenig bis überhaupt nicht verdichtet sind. Wird der Außenring 1 über das Rollenlager gezwungen, sich zur Achslinie einer Welle hin auszurichten und muß sich beispielsweise gegenüber dem Gehäuse 6 in Pfeilrichtung bewegen, wird die stark verdichtete Zone 8 in eine rollende Walkbewegung versetzt, während die seitlichen Bereiche 4, 7 sich weichelastisch verformen. Durch die starke Verdichtung ist der Außenring 1 in radialer Richtung nahezu festsitzend.

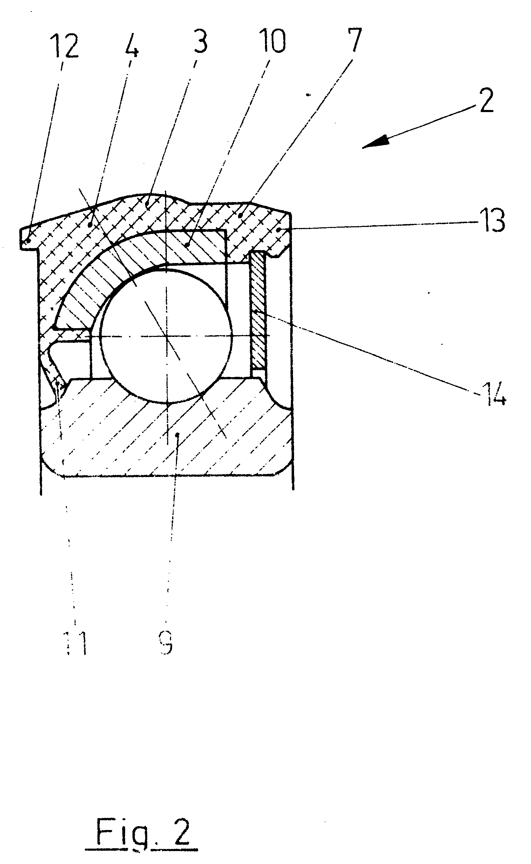

In Fig. 2 ist ein Schrägkugellager dargestellt mit einem massiven Innenring 9 und einem aus Blech geformten Außenring 10. Ein Kunststoffmantel 2 aus weichelastischem Material ist um den Außenring 10 gespritzt und weist wie auch in Fig. 1a und 1b dargestellt, eine Ringwulst 3 und einen kegelförmigen Mantelteil 4 auf. Auf der einen Seite des Außenringes 1 setzt sich der Kunststoffmantel 2 in Form einer Dichtlippe 11 radial fort, die mit einer Fläche am Innenring 9 eine Dichtung bildet. An der Seitenfläche sind am Umfang verteilte, axial vorstehende Noppen 12 angeformt. Auf der anderen Seite des Außenringes 1 ist der Kunststoffmantel 2 axial verlängert und weist eine nach innen offene Ringnut 13 zur Aufnahme einer Dichtscheibe 14 auf.

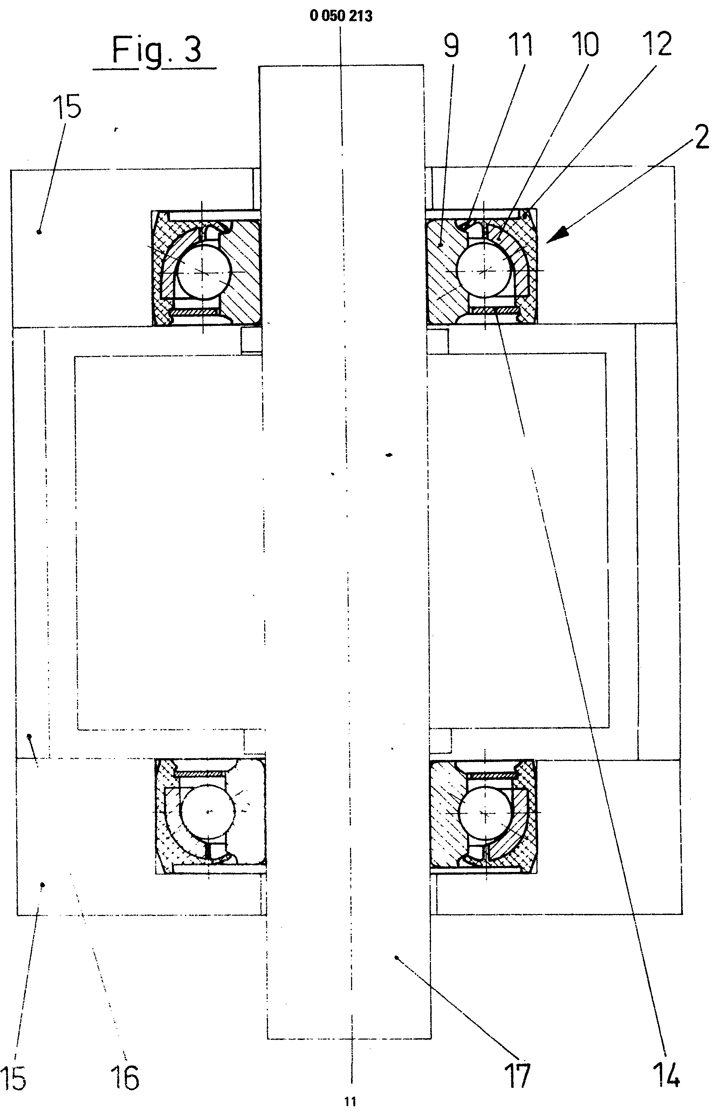

Über zwei (wie in Fig. 2 dargestellte) Schrägkugellager, ist die in Fig. 3 gezeigte Welle 17 in einem Gehäuse 6 drehbar gelagert. Das Gehäuse 6 besteht im wesentlichen aus zwei Lagerschilden 15, die nach dem Zusammenbau an einem Gehäusemantel 16 befestigt werden. Durch die Fertigungstoleranzen der Einzelteile sind Fluchtungsfehler der beiden zylindrischen Bohrungen 5 für die Außenringe 1 der Schrägkugellager möglich. Um trotzdem einen einwandfreien Lauf der Welle 17 zu gewährleisten, können sich die Außenringe 1, wie oben beschrieben, über den Kunststoffmantel 2 ausrichten.

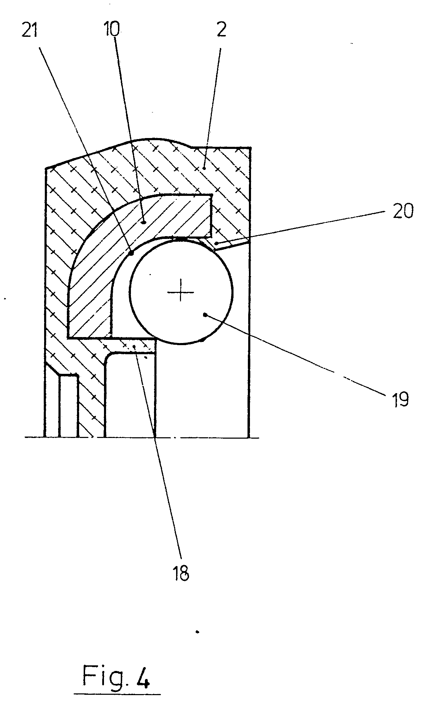

Der in Fig. 4 dargestellte Außenring 10 eines Schrägkugellagers für eine selbstausrichtende Lagerung ist mit einem Kunststoffmantel 2 umgeben. Von einer der Seitenflächen aus setzt sich der Kunststoffmantel 2 axial bis in den Lagerinnenraum reichend fort und bildet einen Haltering 18 für Kugeln 19. An der anderen Seitenfläche ist ein zweiter Haltering 20 vorgesehen, der radial nach innen gerichtet ist und über den zylindrischen Abschnitt der Laufbahn 21 vorspringt. Beide Halteringe 18, 20 sind durch die Verwendung eines elastischen Materials federnd nachgiebig und so dimensioniert bzw. angeordnet, daß ihr Abstand voneinander geringfügig kleiner ist als der Durchmesser der Kugeln 19. Beim Einfüllen bewirkt ein leichter Druck auf die Kugeln 19 ein elastisches, teils radiales, teils axiales Nachgeben der Halteringe 18, 20, wodurch sich der lichte Abstand der Halteringe 18, 20 voneinander vergrößert und die Kugeln 19 in die Laufbahn 21 des Außenringes 10 gleiten. Nachdem die Kugeln 19 mit ihrem größten Durchmesser die Halteringe 18, 20 passiert haben, verringert sich der Abstand der Halteringe 18, 20 zueinander wieder und die Kugeln 19 können unbeabsichtigt nicht mehr aus der Laufbahn 21 fallen.

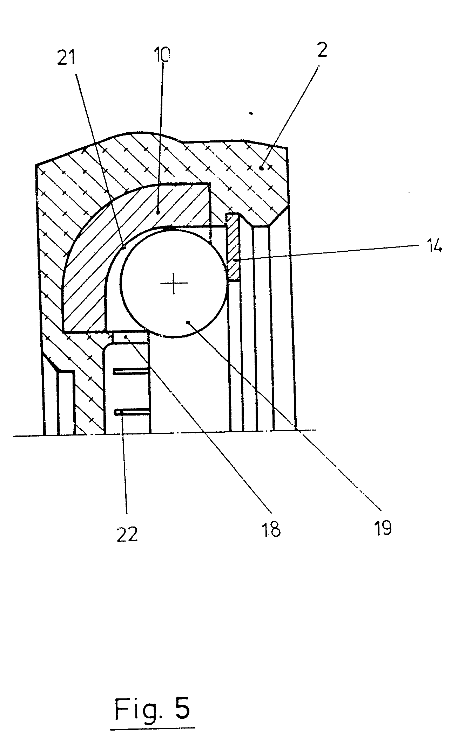

Bei dem in Fig. 5 dargestellten Außenring 10 eines Schrägkugellagers ist der radial nach innen gerichtete Haltering durch eine Dichtscheibe 14 ersetzt. Diese bewirkt neben ihrer eigentlichen Aufgabe ein Halten der Kugeln 19 in axialer Richtung. Der von der anderen Seite des Außenringes 10 aus axial nach innen gerichtete Haltering 18 weist am Umfang verteilt angeordnete, axial verlaufende Schlitze 22 auf. Dadurch ist er in Umfangsrichtung in einzelne Ringabschnitte unterteilt, wobei sich ein besseres elastisches Verhalten des gesamten Halteringes 18 ergibt.

Die dargestellten und beschriebenen Ausführungen sind nur Beispiele. Ein besonders artverwandter Anwendungsfall ist beispielsweise eine Lagerung mit Gleitlagern.

## Patentansprüche

1. Selbstausrichtende Lagerung, insbesondere für Wellen von Elektromotoren, bestehend aus zwei mit Abstand voneinander und mit festem Sitz auf einer Welle angeordneten Lagern, insbesondere Wälzlagern, wobei der Außenring (1) mindestens eines Lagers mit einem Kunststoffmantel (2) versehen ist und von einem Lagersitz in einem Gehäuse (6) oder dgl. aufgenommen wird, dadurch gekennzeichnet, daß der Kunststoffmantel (2) aus einem mit dem Außenring (1) festverbundenen, weichelastischen Material besteht und einen radial vorstehenden, beim Einpressen in den Lagersitz sich bis zur Kompressionsgrenze verdichtenden Ringwulst (3) mit gegenüber dem restlichen Mantelteil (7) größeren Außendurchmesser aufweist, und der Lagersitz im Gehäuse (6) zylindrisch ist.

2. Selbstausrichtende Lagerung nach Anspruch 1, dadurch gekennzeichnet, daß der Kunststoffmantel (2) im Anschluß an die Ringwulst (3) mindestens zu einer Seitenfläche des Außenringes (1) hin kegelförmig verjüngt ist.

3. Selbstausrichtende Lagerung nach den Ansprüchen 1 oder 2, dadurch gekennzeichnet, daß der Kunststoffmantel (2) mindestens eine Seitenfläche des Außenringes (1) ganz oder teilweise umfassend angeordnet ist.

4. Selbstausrichtende Lagerung nach Anspruch 3, dadurch gekennzeichnet, daß der Kunststoffmantel (2) sich im wesentlichen radial nach innen als ringförmige Lippe (11) fortsetzend und mit einer Fläche des Innenringes (9) eine Dichtung bildend angeordnet ist.

5. Selbstausrichtende Lagerung nach Anspruch 3, dadurch gekennzeichnet, daß der Kunststoffmantel (2) axial vorspringende, am Umfang verteilte Noppen (12) aufweist.

6. Selbstausrichtende Lagerung nach einem der Ansprüche 1 bis 5, dadurch gekennzeichnet, daß der Kunststoffmantel (2) an mindestens einer Seitenfläche des Außenringes (1) im wesentlichen axial überstehend eine radial nach innen offene Ringnut (13) zur Aufnahme einer Dichtscheibe (14) oder dgl. aufweist.

7. Selbstausrichtende Lagerung nach einem der Ansprüche 1 bis 6, dadurch gekennzeichnet, daß zwischen dem Außenring (1) und dem Kunststoffmantel (2) durch Umspritzen, Vulkanisieren, Kleben oder dgl. eine feste Verbindung besteht.

8. Selbstausrichtende Lagerung, nach einem der Ansprüche 1 bis 7, dadurch gekennzeichnet, daß der Kunststoffmantel (2) mehrteilig ausgebildet ist.

9. Selbstausrichtende Lagerung, nach Anspruch 7, dadurch gekennzeichnet, daß die Ringwulst (3) durch einen in den Kunststoffmantel (2) eingesetzten Rundschnurring gebildet ist.

10. Selbstausrichtende Lagerung nach einem der Ansprüche 1 bis 9, dadurch gekennzeichnet, daß die Lager als Schrägkugellager mit mindestens einem aus Blech geformten Laufring (10) ausgeführt sind.

11. Selbstausrichtende Lagerung nach einem der Ansprüche 1 bis 10, dadurch gekennzeichnet, daß von mindestens einer Seitenfläche des Außenringes her ein in den Bereich des Lagerinnenraumes hineinragender, an den Kunststoffmantel (2) angeformter, elastischer Haltering (18, 20) für Wälzkörper (19) vorgesehen ist.

12. Selbstausrichtende Lagerung nach Anspruch 1, dadurch gekennzeichnet, daß der Haltering (16, 20) bei zusammengebautem Wälzlager im Abstand von den Wälzkörpern (19) angeordnet ist.

13. Selbstausrichtende Lagerung nach den Ansprüchen 11 oder 12, dadurch gekennzeichnet, daß der Haltering (18, 20) am Umfang verteilte, axial verlaufende Schlitze (22) aufweist.

## Claims

1. Self-aligning bearing arrangement, particularly for shafts of electric motors, consisting of two bearings, particularly rolling bearings, mounted to be spaced apart and with tight fit on a shaft, the outer ring (1) of at least one bearing being provided with a plastic outer jacket (2) and received in a bearing seat of a housing (6) or similar holder, characterized in that the plastic jacket (2) consits of an elastically yielding material firmly bonded to the outer ring (1) having a radially extending annular ridge (3) which upon forcing said outer ring in the bearing seat is radially compressed close to its compression limit, said ridge having a larger outside diameter than the remainder of said jacket (7) and said bearing seat in the housing (6) being cylindrical.

2. Self-aligning bearing arrangement as claimed in claim 1, characterized in that the plastic jacket (2) has a conical portion adjoining the annular ridge (3) and extending with decreasing diameter towards at least one face of the outer ring (1).

3. Self-aligning bearing arrangement as claimed in claims 1 or 2, characterized in that the plastic jacket (2) is positioned to partly or wholly embrace at least one face of the outer ring (1).

4. Self-aligning bearing arrangement as claimed in claim 3, characterized in that the plastic jacket (2) has a substantially radially inwardly extending annular lip (11) positioned to form a seal with one surface of the inner ring (9).

5. Self-aligning bearing arrangement as claimed in claim 3, characterized in that the plastic jacket (2) is provided with axially extending, circumferentially distributed lugs (12).

6. Self-aligning bearing arrangement as claimed in one of the claims 1 to 5, characterized in that the plastic jacket (2) extends substantially axially beyond at least one face of the outer ring (1) and has an annular groove (13) radially open towards the inside to accommodate a seal (14) or similar element.

7. Self-aligning bearing arrangement as claimed in one of the claims 1 to 6, characterized in that there is a firm bonding between the outer ring (1) and the plastic jacket (2) realized by means of moulding, vulcanizing, gluing or the like.

8. Self-aligning bearing arrangement as claimed in one of the claims 1 to 7, characterized in that the plastic jacket (2) is comprised of serveral separate parts.

9. Self-aligning bearing arrangement as claimed in claim 7, characterized in that the annular ridge (3) is formed by an O-ring inserted in the plastic jacket (2).

10. Self-aligning bearing arrangement as claimed in one of the claims 1 to 9, characterized in that the said bearings are angular contact ball bearings having at least one bearing ring (10) formed of sheet metal.

11. Self-aligning bearing arrangement as claimed in one of the claims 1 to 10, characterized in that the plastic jacket (2) has at least one elastic retaining ring (18, 20) formed thereon, said retaining ring projecting along at least one face of the outer ring into the bearing interior to retain rolling elements (19).

12. Self-aligning bearing arrangement as claimed in claim 1, characterized in that the retaining ring (16, 20) is in assembled condition spaced at same pitch as the rolling elements.

13. Self-aligning bearing arrangement as claimed in claims 11 or 12, characterized in that the retaining ring (18, 20) is provided with axially extending slots (22) distributed about its circumference.

## Revendications

1. Montage auto-aligneur, particuliérement convenable pour des arbres de moteurs électriques, comprenant deux roulements montés à écartement et à ajustement serré sur un arbre, la bague extérieure (1) d'au moins un des roulements étant munie d'un revêtement plastique extérieur (2) et étant recueillie dans un logement d'un palier (6) ou support similaire, caractérisé par le fait que le revêtement plastique (2) consiste en une matière élastiquement souple fermement liée à bague extérieure (1) ayant un bourrelet annulaire (3) qui s'étend radialement et qui, lors de son enfoncement dans le logement, se comprime jusqu'à sa limite de compression, ce bourrelet ayant un diamètre extérieur plus large que le reste du revêtement (7), le logement dans le palier (6) étant cylindrique.

2. Montage auto-aligneur suivant la revendication 1, caractérisé par le fait que le revêtement plastique (2) s'allonge coniquement à partir du bourrelet annulaire (3) vers au moins une face latérale de la bagne extérieure (1).

3. Montage auto-aligneur suivant les revendications 1 ou 2, caractérisé par le fait que le revêtement plastique (2) est disposé de manière à enrober entièrement ou partiellement au moins une face latérale de la bagaue extérieure (1).

4. Montage auto-aligneur suivant la revendication 3, caractérisé par le fait que le revêtement plastique (2) s'étend essentiellement en direction radiale vers l'inérieur sous forme d'une lèvre annulaire (11) disposée à constituer un joint d'ètanchéité avec une surface de la bague intérieure (9).

5. Montage auto-aligneur suivant la revendication 3, caractérisé par le fait que le revêtement plastique (2) est pourvu de noppes (12) axialement saillantes etreparties sur la circonférence.

6. Montage auto-aligneur suivant l'une quelconque des revendications 1 à 5, caractérisé par le fait que le revêtement plastique (2) comporte une rainure circulaire (13) disposée à saillir essentiellement en direction axiale au moins une face latérale de la bague extérieure (1), cette rainure circulaire étant radialement ouverte vers l'intérieur et destinée à recueillir un joint d'étanchéité (14) ou élément similaire.

7. Montage auto-aligneur suivant l'une quelconque des revendications 1 à 6, caractérisé par le fait qu'une liaison ferme entre la bague extérieure (1) et le revêtement plastique (2) est réalisée par enrobage, vulcanisation, collage ou une autre méthode similaire.

8. Montage auto-aligneur suivant l'une quelconque des revendications 1 à 7, caractérisé par le fait que le revêtement plastique (2) consiste en plusieurs parties.

9. Montage auto-aligneur suivant la revendication 7, caractérisé par le fait que le bourrelet annulaire (3) est formé par une baguee O insérée dans le revêtement plastique (2).

10. Montage outo-aligneur suivant l'une quelconque des revendications 1 à 9, caractérisé par le fait que les roulements sont des roulements à billes à contact oblique dont au moins une bague (10) est réalisée en tôle.

11. Montage auto-aligneur suivant l'une quelconque des revendications 1 à 10, caractérisé par le fait que le revêtement plastique (2) est réalisé de mainière à former une bague de retenue élastique (18, 20) s'étendant à partir d'au moins une face latérale de la bague extérieure (1) vers et dans l'intérieur du roulement pour retenir des éléments roulants (19).

12. Montage auto-aligneur suivant la revendication 1, caractérisé par le fait que la bague de retenue (18, 20) est disposée, après assemblage du roulement, à des distances égales à celles de éléments roulants (19).

13. Montage auto-aligneur suivant les revendications 11 ou 12, caractérisé par le fait que la bague de retenue (18, 20) est pourvue de fentes axiales reparties sur la circonférence.

Fig. 1a

Fig. 1b

Fig. 2

0 050 213

Fig. 3

Fig. 4

Fig. 5